(19) Europäisches Patentamt
European Patent Office
Office européen des brevets

(11) EP 4 775 631 A1

(12) **EUROPEAN PATENT APPLICATION**
published in accordance with Art. 153(4) EPC

(43) Date of publication:
**15.07.2026 Bulletin 2026/29**

(21) Application number: **24862776.2**

(22) Date of filing: **03.09.2024**

(51) International Patent Classification (IPC):
***C08L 23/26*** *(2025.01)* ***B32B 27/28*** *(2006.01)*
***C08K 3/22*** *(2006.01)* ***C08L 23/08*** *(2025.01)*

(52) Cooperative Patent Classification (CPC):
**B32B 27/28; C08K 3/22; C08L 23/08; C08L 23/26**

(86) International application number:
**PCT/JP2024/031550**

(87) International publication number:
**WO 2025/053124 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023146345**

(71) Applicant: **Mitsubishi Chemical Corporation**
**Tokyo 100-8251 (JP)**

(72) Inventor: **OURA, Kohei**
**Tokyo 100-8251 (JP)**

(74) Representative: **Hoffmann Eitle**
**Patent- und Rechtsanwälte PartmbB**
**Arabellastraße 30**
**81925 München (DE)**

# (54) COMPOSITION, MULTILAYER STRUCTURE, MOLDED BODY, PACKAGING MATERIAL CONTAINER, AND METHOD FOR PRODUCING COMPOSITION

(57) To provide a composition having both excellent thermal stability and excellent suppression in heat-induced coloring, a composition is formed and contains: an ethylene-vinyl alcohol copolymer (A), a copolymer (B) including an ethylene structural unit and a structural unit represented by Formula (1) below, and a titanium compound (C), the content of the titanium compound (C) in the composition, in terms of metal, being 0.001 ppm by mass or greater and less than 10 ppm by mass,

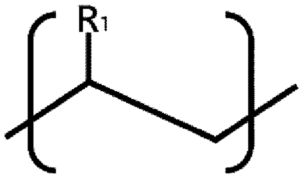

··· (1)

where R1 is an alkoxycarbonyl group ($-COOR_A$) or an acyloxy group ($-OOCR_A$), and the $R_A$ represents a hydrogen atom or an aliphatic hydrocarbon group having from 1 to 20 carbons.

EP 4 775 631 A1

## Description

### Technical Field

The present disclosure relates to a composition, a multilayer structure, a molded body, a packaging material container, and a method for producing the composition.

### Background Art

An ethylene-vinyl alcohol copolymer (hereinafter, may be referred to as "EVOH") has been widely used as a thermoplastic resin because of excellent oil resistance, organic solvent resistance, rigidity, hardness, wear resistance, and gas barrier properties, compared to other resins.

Various such EVOHs having various performance improvements adapted to various uses have been proposed. For example, Patent Documents 1 and 2 propose those having improved impact resistance and fluidity without deterioration of these preferred properties. Furthermore, Patent Documents 3 and 4 propose those having improved long-run moldability and bending fatigue resistance. Patent Document 5 proposes those having improved adhesion to a hydrophobic thermoplastic resin without deterioration in gas barrier properties.

### Citation List

### Patent Literature

Patent Document 1: JP 42-3185 B
Patent Document 2: JP 5-2699 B
Patent Document 3: JP 4642195 B
Patent Document 4: JP 2001-288323 A
Patent Document 5: JP 5610955 B

### Summary

### Technical Problem

Although EVOHs described in Patent Documents 1 to 5 have improved performances corresponding to the uses, there is room for improvement for achieving thermal stability and suppressing heat-induced coloring in a compatible manner.

In such circumstances, the present disclosure provides a composition having both excellent thermal stability and excellent suppression in heat-induced coloring.

### Solution to Problem

As a result of diligent research performed in light of such circumstances, the inventor of the present disclosure found that an EVOH composition having both excellent thermal stability and excellent suppression in heat-induced coloring can be obtained by allowing the composition to contain an EVOH (A), a copolymer (B) including an ethylene structural unit and a structural unit represented by Formula (1) below, and a titanium compound (C), a content of the titanium compound (C) in terms of metal being 0.001 ppm by mass or greater and less than 10 ppm by mass of the composition.

That is, the present disclosure provides the following aspects.

[1] A composition including: an EVOH (A); a copolymer (B) including an ethylene structural unit and a structural unit represented by Formula (1) below; and a titanium compound (C);

a content of the titanium compound (C) in the composition, in terms of metal, being 0.001 ppm by mass or greater and less than 10 ppm by mass,

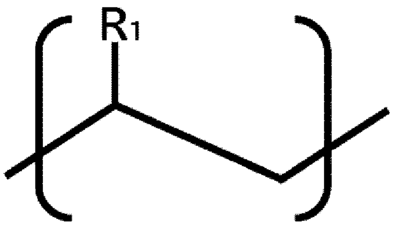

• • • Formula (1)

where $R_1$ is an alkoxycarbonyl group ($-COOR_A$) or an acyloxy group ($-OOCR_A$), and the $R_A$ represents a hydrogen atom or an aliphatic hydrocarbon group having from 1 to 20 carbons.

[2] The composition according to [1], where $R_A$ represented in Formula (1) above is a hydrogen atom or an aliphatic hydrocarbon group having from 1 to 4 carbons.
[3] The composition according to [1] or [2], where the copolymer (B) includes an ethylene-vinyl carboxylate copolymer and/or an ethylene-acrylate copolymer (B1).
[4] The composition according to any one of [1] to [3], where

the copolymer (B) includes
an ethylene-vinyl carboxylate copolymer and/or an ethylene-acrylate copolymer (B1), and
at least one copolymer (B2) selected from the group consisting of an ethylene-vinyl carboxylate copolymer having a polar group, an ethylene-acrylate copolymer having a polar group, an ethylene-vinyl carboxylate-maleic anhydride copolymer, and an ethylene-acrylate-maleic anhydride copolymer.

[5] The composition according to [4], where the polar group in the ethylene-vinyl carboxylate copolymer having a polar group is a carboxy group or a carbonyloxycarbonyl group.
[6] The composition according to [4] or [5], where
the copolymer (B) is the ethylene-vinyl carboxylate copolymer having a polar group and/or the ethylene-acrylate copolymer having a polar group, and at least one of the polar groups is a carboxy group.
[7] The composition according to [5], where the carbonyloxycarbonyl in the carbonyloxycarbonyl group is maleic anhydride.
[8] The composition according to any one of [1] to [7], where the content of the titanium compound (C) in the composition is 0.001 ppm by mass or greater and 5 ppm by mass or less.
[9] The composition according to any one of [1] to [8], where a mass ratio (A/B) of the EVOH (A) to the copolymer (B) is from 70/30 to 99/1.
[10] The composition according to any one of [1] to [9], where a mass ratio (A/B) of the EVOH (A) to the copolymer (B) is from 70/30 to 85/15.
[11] The composition according to any one of [4] or [5], where a mass ratio (B2/B1) of the copolymer (B2) to the copolymer (B1) is from 0.01 to 10.
[12] The composition according to [4] or [5], where a mass ratio [A/(B1 + B2)] of the EVOH (A) to a total mass of the copolymer (B1) and the copolymer (B2) is from 50/50 to 99/1.
[13] A composition for recycling, the composition according to any one of [1] to [12] being for recycling.
[14] A regrind layer containing the composition according to any one of [1] to [12].
[15] A multilayer structure including a layer including the composition according to any one of [1] to [12].
[16] The multilayer structure according to [15], further including an adhesive resin layer.
[17] A molded body obtained by molding the multilayer structure according to [15] or [16].
[18] A packaging material container obtained by molding the multilayer structure according to [15].
[19] A method for producing the composition according to any one of [1] to [12],

the method including
mixing the EVOH (A), the copolymer (B), and the titanium compound (C).

[20] A method for producing the composition according to [4] or [5],

the method including
mixing the EVOH (A), the copolymer (B1), the copolymer (B2), and the titanium compound (C).

[21] A method for producing a multilayer structure, the method including:

producing a composition by the method for producing a composition according to [19] or [20]; and
forming, as at least one layer of a multilayer structure, a layer including the composition produced by the producing of the composition.

Advantageous Effects of Disclosure

The present disclosure achieves both excellent thermal stability and excellent suppression in heat-induced coloring by allowing a composition to contain an EVOH (A), a copolymer (B) including an ethylene structural unit and a structural unit represented by Formula (1) below, and a titanium compound (C), and by setting a content of the titanium compound (C) in terms of metal to a specific small amount, which is 0.001 ppm by mass or greater and less than 10 ppm by mass of the composition.
Thus, the composition can be suitably used as an EVOH resin layer of a multilayer structure, in which resins having different properties are laminated.

Description of Embodiments

The present disclosure will be described below with reference to embodiments for performing the present disclosure. However, the present disclosure is not limited to the embodiments described below.
Note that, in the present disclosure, the wording "X and/or Y (with X and Y being any configurations)" means at least one selected from X and Y, and includes the three meanings of only X, only Y, and both X and Y.
Unless otherwise specified, the expression "(from) x to y" (with x and y being any numbers) includes the meaning of "x or greater and y or less" and the meaning of "preferably greater than x" or "preferably less than y".
The expression "x or greater" (with x being any number) or "y or less" (with y being any number) encompasses "preferably greater than x" or "preferably less than y".
In the present specification, with respect to numerical ranges described in steps, the upper limit or the lower limit of a numerical range of a certain step can be optionally combined with the upper limit or the lower limit of a numerical range of another step. In addition, in a numerical range described in the present specification, the upper limit or the lower limit of the numerical range can be replaced with a value presented in the Examples.
Furthermore, in the present disclosure, "(meth)acryl" means acryl or methacryl, "(meth)acryloyl" means acryloyl or methacryloyl, and "(meth)acrylate" means acrylate or methacrylate. In addition, "acrylic resin" means a resin obtained by polymerizing a copolymer component containing at least one type of (meth)acrylate-based monomer.
In the present disclosure, a "main component" means a component that significantly affects the properties of the target object, and the content of the component in the target object is usually 50 mass% or greater, preferably 55 mass% or greater, more preferably 60 mass% or greater, and even more preferably 70 mass% or greater, and may be 100 mass%.
The EVOH composition according to an embodiment of the present disclosure (hereinafter, may be referred to as "the present EVOH composition") contains an EVOH (A) (hereinafter, may be referred to as "component A"), a copolymer (B) including an ethylene structural unit and a structural unit represented by Formula (1) below (hereinafter, may be referred to as "component B"), and a titanium compound (C) (hereinafter, may be referred to as "component C"), and the content of the titanium compound (C) in terms of metal is set to 0.001 ppm by mass or greater and less than 10 ppm by mass of the present EVOH composition,

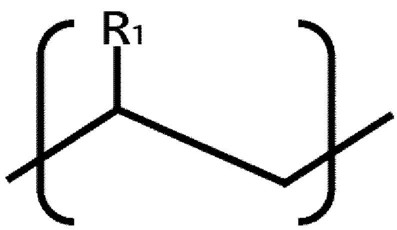

• • • Formula (1)

where $R_1$ is an alkoxycarbonyl group ($-COOR_A$) or an acyloxy group ($-OOCR_A$), and the $R_A$ represents a hydrogen atom or an aliphatic hydrocarbon group having from 1 to 20 carbons.
Hereinafter, the respective components will be described.

Component A

The EVOH (A) used in the present EVOH composition is usually a resin obtained by subjecting ethylene and a vinyl ester-based monomer to copolymerization and then to saponification, and is a water-insoluble thermoplastic resin known as a saponified product of an ethylene-vinyl alcohol-based copolymer or an ethylene-vinyl acetate-based

copolymer. As the polymerization method, any freely chosen known polymerization method, such as solution polymerization, suspension polymerization, or emulsion polymerization, can be used, and solution polymerization using methanol as a solvent is generally used. Saponification of the resulting ethylene-vinyl ester-based copolymer can also be performed by a known method.

That is, the EVOH (A) used in the present disclosure mainly contains an ethylene structural unit and a vinyl alcohol structural unit and also contains a small amount of vinyl ester structural unit remained unsaponified. Note that EVOH is generally also referred to as "ethylene-vinyl ester-based copolymer saponified product".

As the vinyl ester-based monomer, vinyl acetate is typically used from the viewpoints of good market availability and good impurity treatment efficiency during production. In addition, examples of the vinyl ester-based monomer also include aliphatic vinyl esters, such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters, such as vinyl benzoate. In particular, the vinyl ester-based monomer is preferably an aliphatic vinyl ester having from 3 to 20 carbons, more preferably from 4 to 10 carbons, and particularly preferably from 4 to 7 carbons. One type of these is usually used alone, but, as necessary, a plurality of types of these may be used simultaneously.

The content of the ethylene structural unit in the EVOH (A) is usually from 20 to 60 mol%, preferably from 21 to 55 mol%, more preferably from 22 to 50 mol%, and particularly preferably from 23 to 45 mol%, in terms of a value measured in accordance with ISO 14663. When the content is not lower than the lower limit value, gas barrier properties at high humidity and melt moldability tend to be excellent. When the content is not higher than the upper limit value, gas barrier properties tend to be excellent.

The degree of saponification of the vinyl ester component in the EVOH (A) is a value measured based on JIS K 6726 (however, the degree is measured in a solution prepared by uniformly dissolving the EVOH in a water/methanol solvent), and is usually from 90 to 100 mol%, preferably from 95 to 100 mol%, and particularly preferably from 99 to 100 mol%. When the degree of saponification is not lower than the lower limit value, gas barrier properties, thermal stability, moisture resistance, and the like tend to be excellent.

The melt flow rate (MFR) (210°C; load: 2160 g) of the EVOH (A) is usually from 0.5 to 100 g/10 min, preferably from 1 to 50 g/10 min, and particularly preferably from 3 to 35 g/10 min. When the MFR is not higher than the upper limit value, film formability tends to be excellent. Furthermore, when the MFR is not lower than the lower limit value, melt-extrusion tends to be easier.

The EVOH (A) used in the present EVOH composition may further contain a structural unit derived from the following comonomer, in addition to the ethylene structural unit and the vinyl alcohol structural unit (including unsaponified vinyl ester structural unit). Examples of the comonomer include α-olefins, such as propylene, isobutene, α-octene, α-dodecene, and α-octadecene; hydroxy group-containing α-olefins, such as 3-butene-1-ol, 4-penten-1-ol, and 3-butene-1,2-diol, and hydroxy group-containing α-olefin derivatives, such as esterified products and acylated products of a hydroxy group-containing α-olefin; hydroxymethylvinylidene diacetates, such as 1,3-diacetoxy-2-methylenepropane, 1,3-dipropionyloxy-2-methylenepropane, and 1,3-dibutyronyloxy-2-methylenepropane; unsaturated carboxylic acids, or their salts, partial alkyl esters, complete alkyl esters, nitriles, amides, or anhydrides; unsaturated sulfonic acids or their salts; vinylsilane compounds; vinyl chloride; and styrene. One type of these may be used alone, or two or more of these may be used in combination.

Furthermore, as the EVOH (A), a "post-modified" EVOH, such as a urethanized, acetalized, cyanoethylated, or oxyalkylenated EVOH, may also be used.

Among the aforementioned modified EVOHs (A), an EVOH (A) in which a primary hydroxy group has been introduced to a side chain by copolymerization is preferable because secondary moldability for the stretching treatment, the vacuum-pressure molding, and the like becomes good. In particular, an EVOH (A) having a 1,2-diol structure in a side chain is preferable.

Furthermore, the EVOH (A) used in the present EVOH composition may be a mixture with another EVOH, and examples of such an additional EVOH include an EVOH having a different content of ethylene structural unit, an EVOH having a different degree of saponification, an EVOH having a different melt flow rate (MFR) (210°C; load: 2160 g), an EVOH having a different other copolymer component, and an EVOH having a different modification amount (for example, an EVOH having a different content of structural unit having a primary hydroxy group in a side chain).

The content of the EVOH (A) contained in the present EVOH composition is not particularly limited. The EVOH (A) is preferably a main component (that is, the content of the EVOH (A) contained in the present EVOH composition is 50 mass% or greater), and the content of the EVOH (A) is more preferably 55 mass% or greater, even more preferably 60 mass% or greater, particularly preferably 70 mass% or greater, especially preferably 80 mass% or greater, and most preferably 90 mass% or greater.

Component B

The component B used together with the EVOH (A) in the present EVOH composition is a copolymer (B) including

an ethylene structural unit and a structural unit represented by Formula (1) below,

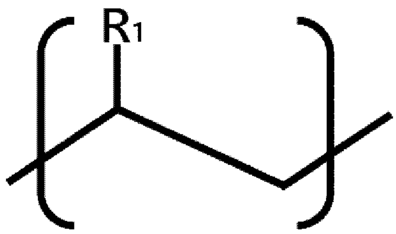

• • • Formula (1)

where $R_1$ is an alkoxycarbonyl group (-COOR$_A$) or an acyloxy group (-OOCR$_A$), and the $R_A$ represents a hydrogen atom or an aliphatic hydrocarbon group having from 1 to 20 carbons.

By allowing the component B to be contained, the present EVOH composition achieves excellent mechanical strength and excellent flexibility. From this viewpoint, for example, a multilayer structure containing the present EVOH composition tends to exhibit excellent mechanical strength without blending of a resin, such as PA, PVDC, PET, PVOH, and PVC, that is generally excellent in mechanical strength.

In the component B, $R_A$ represented in General Formula (1) is a hydrogen atom or an aliphatic hydrocarbon group having from 1 to 20 carbons; however, from the viewpoint of structural stability, $R_A$ represented in Formula (1) is preferably a hydrogen atom or an aliphatic hydrocarbon group having from 1 to 4 carbons. When $R_1$ is an acyloxy group, an ethylene-vinyl carboxylate copolymer is preferable, and when $R_1$ is an alkoxycarbonyl group, an ethylene-acrylate copolymer is more preferable.

One type of these is usually used alone, but, as necessary, a plurality of types of these may be used simultaneously. For example, an ethylene-vinyl carboxylate copolymer and/or an ethylene-acrylate copolymer (B1) (hereinafter, may be referred to as "component B1") may be contained.

The density of the component B is a value measured based on JIS K 7112 and is usually from 0.85 to 0.99 g/cm$^3$, preferably from 0.86 to 0.98 g/cm$^3$, and more preferably from 0.87 to 0.97 g/cm$^3$. When the density is set within the range described above, the effects of the present disclosure tend to be further enhanced.

The content of the component B contained in the present EVOH composition is not particularly limited, and is preferably 50 mass% or less, more preferably 45 mass% or less, particularly preferably 40 mass% or less, especially preferably 35 mass% or less, and most preferably 30 mass% or less, with respect to the present EVOH composition. Note that the lower limit of the content is usually 1 mass% or greater, preferably 15 mass% or greater, and particularly preferably 20 mass% or greater.

That is, the content of the component B contained in the present EVOH composition is preferably from 1 to 50 mass%, more preferably from 5 to 45 mass%, particularly preferably from 10 to 40 mass%, especially preferably from 15 to 35 mass%, and most preferably from 20 to 30 mass%.

Furthermore, the mass ratio (A/B) of the EVOH (component A) to the component B is preferably from 50/50 to 99/1, more preferably from 70/30 to 85/15, and particularly preferably from 70/30 to 80/20. When the mass ratio (A/B) is set within the range described above, thermal stability tends to be even better.

Component B1

The ethylene-vinyl carboxylate copolymer is a resin obtained by copolymerizing ethylene and a vinyl carboxylate-based monomer. Furthermore, the ethylene-acrylate copolymer is a resin obtained by copolymerizing ethylene and acrylate-based monomer.

The vinyl carboxylate-based monomer is not particularly limited as long as the vinyl carboxylate-based monomer is a known vinyl carboxylate-based monomer. For example, the number of carbons in the acyloxy group in the vinyl carboxylate-based monomer is from 1 to 18, more preferably from 2 to 8, and particularly preferably from 2 to 6. One type of these is usually used alone, but, as necessary, a plurality of types of these may be used simultaneously. Vinyl acetate is typically preferably used from the viewpoints of good market availability and good impurity treatment efficiency during production.

The acrylate-based monomer is not particularly limited as long as the acrylate-based monomer is a known acrylate-based monomer. For example, the number of carbons in the alkoxycarbonyl group in the acrylate-based monomer is preferably from 1 to 18, more preferably from 2 to 8, and particularly preferably from 2 to 6. Among these, from the viewpoints of copolymerizability, excellence in coating strength, handleability, and availability of raw materials, aliphatic (meth)acrylate-based monomers, typically including methyl (meth)acrylate, ethyl (meth)acrylate, and n-butyl (meth)acrylate, are preferably used, methyl (meth)acrylate and ethyl (meth)acrylate are particularly preferably used. One type of these is usually used alone, but, as necessary, a plurality of types of these may be used simultaneously.

Specific examples of the component B1 include an ethylene-vinyl acetate copolymer (EVA), an ethylene-methyl acrylate copolymer (EMA), and an ethylene-ethyl acrylate copolymer (EEA).

The melt flow rate (MFR) of the ethylene-vinyl carboxylate copolymer (190°C; load: 2160 g) is usually from 0.5 to 50 g/10 min, preferably from 0.5 to 20 g/10 min, more preferably from 1 to 10 g/10 min, particularly preferably from 2 to 9 g/10 min, and most preferably from 3 to 8 g/10 min. When the MFR falls within the range described above, thermal stability tends to be enhanced further.

The vinyl carboxylate monomer content of the ethylene-vinyl carboxylate copolymer is preferably from 1 to 50 mass%, more preferably from 5 to 40 mass%, and even more preferably from 7 to 35 mass%. When the vinyl carboxylate monomer content is set within the range described above, the balance between flexibility and thermal resistance tends to be excellent.

The MFR of the ethylene-acrylate copolymer (190°C; load: 2160 g) is usually from 0.5 to 100 g/10 min, preferably from 0.5 to 50 g/10 min, more preferably from 1 to 35 g/10 min, particularly preferably from 2 to 20 g/10 min, and especially preferably from 3 to 15 g/10 min. When the MFR falls within the range described above, thermal stability tends to be enhanced further.

The acrylate monomer content of the ethylene-acrylate copolymer is preferably from 1 to 50 mass%, more preferably from 5 to 40 mass%, and even more preferably from 10 to 30 mass%. When the acrylate monomer content is set within the range described above, the balance between flexibility and durability tends to be excellent.

The content of the component B1 contained in the present EVOH composition is not particularly limited, and is preferably 30 mass% or less, more preferably 25 mass% or less, particularly preferably 20 mass% or less, especially preferably 15 mass% or less, and most preferably 10 mass% or less, with respect to the present EVOH composition. Note that the lower limit of the content is usually 0.1 mass% or greater, preferably 0.5 mass% or greater, and particularly preferably 1 mass% or greater.

That is, in the case where the component B1 is contained in the present EVOH composition, the content of the component B1 is preferably from 0.1 to 30 mass%, more preferably from 0.5 to 25 mass%, particularly preferably from 1 to 20 mass%, especially preferably from 1 to 15 mass%, and most preferably from 1 to 10 mass%.

Furthermore, the mass ratio (A/B1) of the EVOH (component A) to the component B1 is preferably from 70/30 to 99/1, more preferably from 70/30 to 85/15, and particularly preferably from 70/30 to 80/20. When the mass ratio (A/B1) is set within the range described above, thermal stability tends to be even better.

Component B2

As the component B used together with the EVOH (component A), the present EVOH composition more preferably contains, in addition to the ethylene-vinyl carboxylate copolymer and/or the ethylene-acrylate copolymer (component B1), at least one copolymer (component B2) selected from the group consisting of an ethylene-vinyl carboxylate copolymer having a polar group, an ethylene-acrylate copolymer having a polar group, an ethylene-vinyl carboxylate-maleic anhydride copolymer, and an ethylene-acrylate-maleic anhydride copolymer.

That is, the at least one copolymer selected from the group consisting of an ethylene-vinyl carboxylate copolymer having a polar group, an ethylene-acrylate copolymer having a polar group, an ethylene-vinyl carboxylate-maleic anhydride copolymer, and an ethylene-acrylate-maleic anhydride copolymer, which is used as the component B2, is a copolymer modified in a manner that a polar group is contained in a resin obtained by copolymerizing ethylene and a vinyl carboxylate-based monomer, a copolymer obtained by copolymerizing ethylene and a monomer having a polar group as a vinyl carboxylate-based monomer, a copolymer obtained by copolymerizing a resin obtained by copolymerizing ethylene and acrylate-based monomer and a monomer having a polar group, or a copolymer obtained by copolymerizing ethylene and a monomer having a polar group.

As the vinyl carboxylate-based monomer, vinyl carboxylate-based monomers described for the component B1 can be used, and one type of these is usually used alone, but, as necessary, a plurality of types of these may be used simultaneously.

As the acrylate-based monomer, acrylate-based monomers described for the component B1 can be used, and one type of these is usually used alone, but, as necessary, a plurality of types of these may be used simultaneously.

The polar group in the monomer having the polar group is preferably a carboxy group and/or a carbonyloxycarbonyl group, and more preferably a carbonyloxycarbonyl group. Examples of the monomer having the carboxy group include acrylic acid, methacrylic acid, maleic acid, fumaric acid, crotonic acid, itaconic acid, and citraconic acid. Furthermore, examples of the monomer having the carbonyloxycarbonyl group include maleic anhydride. One type of these may be used alone, or two or more types of these may be used in combination.

The melt flow rate (MFR) of the ethylene-vinyl carboxylate copolymer having the polar group (190°C; load: 2160 g) is usually from 0.5 to 50 g/10 min, preferably from 0.5 to 30 g/10 min, particularly preferably from 1 to 20 g/10 min, and especially preferably from 3 to 20 g/10 min. When the MFR falls within the range described above, thermal stability tends to be enhanced further.

The MFR of the ethylene-acrylate copolymer having the polar group (190°C; load: 2160 g) is usually from 0.5 to 100 g/10 min, preferably from 0.5 to 50 g/10 min, particularly preferably from 1 to 35 g/10 min, especially preferably from 1 to 20 g/10 min, and most preferably from 3 to 20 g/10 min. When the MFR falls within the range described above, thermal stability tends to be enhanced further.

The MFR of the ethylene-vinyl carboxylate-maleic anhydride copolymer (190°C; load: 2160 g) is usually from 0.5 to 100 g/10 min, preferably from 0.5 to 50 g/10 min, particularly preferably from 1 to 35 g/10 min, especially preferably from 1 to 20 g/10 min, and most preferably from 3 to 20 g/10 min. When the MFR falls within the range described above, thermal stability tends to be enhanced further.

The MFR of the ethylene-acrylate-maleic anhydride copolymer (190°C; load: 2160 g) is usually from 0.5 to 100 g/10 min, preferably from 0.5 to 50 g/10 min, particularly preferably from 1 to 35 g/10 min, especially preferably from 1 to 20 g/10 min, and most preferably from 3 to 20 g/10 min. When the MFR falls within the range described above, thermal stability tends to be enhanced further.

The density of the component B2 is a value measured based on JIS K 7112 and is usually from 0.85 to 0.99 g/$cm^3$, preferably from 0.86 to 0.98 g/$cm^3$, and more preferably from 0.87 to 0.97 g/$cm^3$. When the density is set within the range described above, the effects of the present disclosure tend to be further enhanced.

As the component B2, specific examples of the ethylene-vinyl carboxylate copolymer having the polar group include maleic anhydride EVA.

Examples of the ethylene-acrylate copolymer having the polar group include a maleic anhydride ethylene-ethyl acrylate copolymer.

Examples of the ethylene-vinyl carboxylate-maleic anhydride copolymer include an ethylene-vinyl acetate-maleic anhydride terpolymer.

Examples of the ethylene-acrylate-maleic anhydride copolymer include an ethylene-methyl acrylate-maleic anhydride terpolymer, an ethylene-ethyl acrylate-maleic anhydride terpolymer, and an ethylene-butyl acrylate-maleic anhydride terpolymer.

The content of the component B2 is not particularly limited, and is preferably 30 mass% or less, more preferably 25 mass% or less, particularly preferably 20 mass% or less, especially preferably 15 mass% or less, and most preferably 10 mass% or less, with respect to the present EVOH composition. Note that the lower limit of the content is usually 0.1 mass% or greater, preferably 0.5 mass% or greater, and particularly preferably 1 mass% or greater.

That is, in the case where the component B2 is contained in the present EVOH composition, the content of the component B2 is preferably from 0.1 to 30 mass%, more preferably from 0.5 to 25 mass%, particularly preferably from 1 to 20 mass%, especially preferably from 1 to 15 mass%, and most preferably from 1 to 10 mass%.

Furthermore, the mass ratio (A/B2) of the EVOH (component A) to the component B2 is preferably from 70/30 to 99/1, more preferably from 70/30 to 85/15, and particularly preferably from 70/30 to 80/20. When the mass ratio (A/B2) is set within the range described above, thermal stability tends to be even better.

The mass ratio (B2/B1) of the component B2 to the component B1 is preferably from 0.01 to 10, more preferably from 0.01 to 1, even more preferably from 0.02 to 0.8, particularly preferably from 0.03 to 0.5, especially preferably from 0.05 to 0.25, and most preferably from 0.1 to 0.23. When the mass ratio (B2/B1) is set within the range described above, thermal stability tends to be even better.

Furthermore, the mass ratio [A/(B1 + B2)] of the EVOH (component A) to the total mass of the component B1 and the component B2 is preferably from 50/50 to 99/1, more preferably from 70/30 to 85/15, and particularly preferably from 70/30 to 80/20. When the mass ratio [A/(B1 + B2)] is set within the range described above, thermal stability tends to be even better.

Component C

Examples of the titanium compound (C) used in the present EVOH composition include inorganic titanium compounds and organic titanium compounds. One type of the titanium compounds (C) may be used alone, or two or more types of the titanium compounds (C) may be used in combination as long as titanium is contained in the composition. Among these, an inorganic titanium compound is preferable as the titanium compound (C). The presence or absence of such titanium and the content thereof can be determined by ICP-mass spectrometry, for example.

Examples of the inorganic titanium compound include titanium oxides, titanium hydroxides, titanium chlorides, and inorganic salts of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide. Examples of the titanium chloride include titanium(III) chloride and titanium(IV) chloride. Examples of the inorganic salt of titanium include titanium phosphate and titanium sulfate. Among these, titanium oxides are preferable, titanium(IV) oxide is more preferable, and rutile-type titanium(IV) oxide is particularly preferable.

Examples of the organic titanium compound include titanium carboxylates such as titanium acetate, titanium butyrate, and titanium stearate.

The titanium compound (C) may be present as a titanium compound in the EVOH composition, or may be present in an ionized state or in a complex state in which the titanium compound interacts with the EVOH resin or another ligand.

The average particle size of the titanium compound (C) is usually from 0.001 to 100 μm, preferably from 0.01 to 50 μm, and more preferably from 0.015 to 20 μm. When the average particle size of the titanium compound (C) falls within the range described above, the effect of suppressing coloring tends to be excellent.

The content of the titanium compound (C) in terms of metal is 0.001 ppm by mass or greater and less than 10 ppm by mass with respect to the mass of the EVOH composition. The content is preferably 0.01 ppm by mass or greater and less than 5 ppm by mass, more preferably from 0.01 to 3 ppm by mass, even more preferably from 0.03 to 1 ppm by mass, and particularly preferably from 0.05 to 0.5 ppm by mass. When the content of the titanium compound (C) is in the range described above, thermal deterioration-induced color change during melt-molding can be suppressed, and excellent long-run property is achieved. Furthermore, when the content of the titanium compound (C) is not lower than the lower limit value, an excellent effect of suppressing color change is achieved. When the content is not higher than the upper limit value, thermal decomposition of the EVOH (A) and coloring are less likely to occur.

Note that the content of the titanium compound (C) in terms of metal is the content of titanium element.

The content of the titanium compound (C) in terms of metal can be determined by weighing the present EVOH composition in a platinum crucible, sequentially ashing the EVOH composition with a burner and an electric furnace, thermally decomposing the ashed product with nitric acid and hydrofluoric acid, treating the decomposed product with a mixed acid of dilute nitric acid and dilute hydrofluoric acid, and measuring the titanium in a constant volume liquid, which is obtained by adjusting the treated material to a constant volume, by ICP mass spectrometry using an ICP mass spectrometer (Agilent 8800, available from Agilent Technologies).

In general, an EVOH (A) undergoes thermal deterioration-induced coloring. This is considered to be because the EVOH (A) degrades with heat and generates radicals, the hydroxyl groups of the EVOH (A) are dehydrated by the radicals to generate double bonds in the main chain of the EVOH (A), and such sites serve as reaction starting points to further promote dehydration, thereby forming a conjugated polyene structure in the main chain of the EVOH (A).

In contrast, the present EVOH composition contains a specific small amount of the titanium compound (C), and thus thermal deterioration-induced color change of the EVOH (A) is suppressed, and excellent long-run property is achieved. Furthermore, the copolymer (B) component including the ethylene structural unit and the structural unit represented by Formula (1) above in the present EVOH composition has excellent miscibility with the EVOH (A) and achieves excellent mechanical strength of a multilayer structure or molded body containing the EVOH composition.

Usually, in the case where an EVOH composition contains a titanium compound (C), it is considered that the EVOH composition is colored by the titanium ion, and thus a person skilled in the art would avoid use of the titanium compound (C) based on the common technical knowledge.

However, in the present disclosure, contrary to such common technical knowledge, it was found that, in the case where a specific small amount of a titanium compound (C) is used, an EVOH composition in which thermal deterioration-induced color change is suppressed is obtained.

That is, it is presumed that titanium is stable in the form of a tetravalent ion, is coordinated to the double bond of the main chain of the EVOH (A) as described above even in a small amount, and is stabilized by forming a chelate or the like, thereby suppressing formation of a polyene structure.

Method for Producing EVOH Composition

The present EVOH composition can be produced by, for example, mixing the EVOH (component A), the copolymer including the ethylene structural unit and the structural unit represented by Formula (1) above (component B), and the titanium compound (component C) using a known method, such as a dry-blending method, a melt-mixing method, a solution mixing method, or an impregnation method. Among these, production including melt-mixing composition raw materials containing these components A to C is preferable. Furthermore, these production methods can be optionally combined. Note that the components A to C may be mixed at once or may be mixed in a plurality of stages (for example, mixing the component A and the component B first, and then mixing the component C into the mixture of the component A and the component B). In the case where the component B1 and the component B2 are contained, the component A and the component B1 may be mixed first, and then the component B2 and the component C may be mixed into the mixture of the component A and the component B1.

Examples of the dry-blending method include (i) a method of dry-blending a pellet-shaped mixture of components A and B and a titanium compound (C) using a tumbler or the like.

Examples of the melt-mixing method include (ii) a method of melt-kneading a dry blend obtained by dry-blending a pellet-shaped mixture of components A and B and a titanium compound (C), and (iii) a method of melt-kneading a titanium compound (C) added to a molten mixture of components A and B.

Examples of the solution mixing method include (iv) a method of preparing a solution using commercially available components A and B, blending a titanium compound (C) therein, performing solidification molding, then performing solid-liquid separation with a known means, and drying the obtained product; and (v) a method of, in the process of producing an EVOH (A), incorporating a titanium compound (C) in an ethylene-vinyl ester-based copolymer solution before saponification or a uniform solution of an EVOH (A) (water/alcohol solution or the like), performing solidification molding, then performing solid-liquid separation with a known means, and drying the obtained product.

Examples of the impregnation method include (vi) a method of bringing a pellet-shaped mixture of components A and B into contact with an aqueous solution containing a titanium compound (C), incorporating the titanium compound (C) in the mixture of the components A and B, and then drying the obtained product.

As the aqueous solution containing a titanium compound (C), an aqueous solution of a titanium compound (C) or an aqueous solution obtained by immersing a titanium compound (C) in water containing various chemicals to elute titanium ions can be used.

Note that, in the impregnation method, the content of the titanium compound (C) (in terms of metal) can be controlled by the concentration of the titanium compound (C) in the aqueous solution in which the mixture of the components A and B is immersed, the immersion temperature, the immersion time, and the like.

The immersion time is usually from 0.5 to 48 hours, preferably 1 to 36 hours, and the immersion temperature is usually from 10 to 40°C, preferably 20 to 35°C.

As the drying method in each of the production methods described above, various drying methods can be employed, and either static drying or fluidized drying may be employed. These methods can be performed in combination.

As described above, in the present disclosure, the different methods described above can be combined. Among those, a melt-mixing method is preferable, and the method (ii) is particularly preferable, from the viewpoint of productivity and obtaining a composition that exhibits more significant effects of the present disclosure. In a case where the additional thermoplastic resin and an additional compounding agent are used, they are blended by a common process according to the aforementioned production method.

The present EVOH composition produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, and more preferably from 2.5 to 5.5 mm, and a major axis length is usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-shaped mixture of components A and B used in each of the production methods described above are preferably the same.

Even in the case where the present EVOH composition is heated during melt-molding, color change is suppressed and excellent long-run property is achieved. The difference of the yellow index (YI value) before heating and the YI value after heating (YI value after heating - YI value before heating) is usually less than 22.5, preferably 22 or less, and particularly preferably 21 or less. When the difference between the YI value after heating and the YI value before heating is in the range described above, heat-induced color change tends to be considered as being suppressed.

The YI value before heating is determined by measuring a ground product obtained by crushing the present EVOH composition into 1 to 5 mm squares and being charged in a cylinder having an inner diameter of 32 mm and a height of 30 mm in a manner that excess is leveled off, by using a Spectrophotometer SE 6000 (available from Nippon Denshoku Industries Co., Ltd.).

Furthermore, the YI value after heating can be determined by measuring a material obtained by subjecting the present EVOH composition crushed into 1 to 5 mm squares to heat treatment in an oven at 150°C for 5 hours in an air atmosphere, by the same method.

The water content of the present EVOH composition is usually from 0.01 to 0.5 mass%, preferably from 0.05 to 0.35 mass%, and particularly preferably from 0.1 to 0.3 mass%.

The water content of the present EVOH composition is measured and calculated by the following method.

The mass ($W_1$) of the present EVOH composition before drying is weighed with an electronic balance, the resin composition is dried in a hot air dryer at 150°C for 5 hours and then cooled in a desiccator for 30 minutes, and then the mass ($W_2$) after cooling is weighed. The water content is calculated from the following equation.

$$\text{Water content (mass\%)} = [(W_1 - W_2)/W_1] \times 100$$

The present EVOH composition thus produced is prepared into various forms such as a pellet, a powder form, or a liquid form, and is provided as a material for various molded bodies and/or multilayer structures. Because the present EVOH composition is excellent in thermal stability and coloring suppression property, a molded body using the present EVOH composition or a multilayer structure including a layer using the present EVOH composition is advantageous in that deterioration in quality such as thermal deterioration is small even when supplied to recycling involving thermal history. In particular, in the present disclosure, when the composition is provided as a material for melt-molding, the effect of the present disclosure tends to be obtained more efficiently, which is preferable.

Note that the present EVOH composition includes a composition obtained by mixing a resin other than the component (A), the component (B), and the component (C) used in the present EVOH composition.

When the present EVOH composition is in the form of pellets, preferably, a known lubricant is adhered to the surface of the pellets from the viewpoint of stabilizing the feed properties during melt-molding. Examples of the type of lubricant include higher fatty acids having 12 or more carbons (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One type of these compounds may be used alone, or two or more types of these may be used in combination. Furthermore, the content of the lubricant is usually 5 mass% or less, and preferably 1 mass% or less, of the present EVOH composition. The lower limit is usually 0 mass%.

For example, a molded body for which the present EVOH composition is provided as a molding material is also used as a regrind layer because the molded body is suitable as a composition for recycling involving thermal history as well as a monolayer film molded using the present EVOH composition. Examples include a multilayer structure including at least one layer containing the present EVOH composition.

Multilayer Structure

A multilayer structure according to an embodiment of the present disclosure (hereinafter, referred to as "the present multilayer structure") includes at least one layer containing the present EVOH composition. When the layer containing the present EVOH composition (hereinafter, may be simply referred to as "present EVOH composition layer") is laminated with an additional substrate containing a thermoplastic resin other than the present EVOH composition as a main component (hereinafter, resin used in the substrate may be referred to as "substrate resin"), strength can be further imparted, the present EVOH composition layer can be protected from the influence of moisture or the like, and other functions can be imparted.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin-based resins in a broad sense including (unmodified) polyolefin-based resins, such as polybutene, polypentene, polycyclic olefin-based resins (polymers having a cyclic olefin structure in at least one of a main chain or a side chain), and modified olefin-based resins, such as unsaturated carboxylic acid-modified polyolefin-based resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide-based resins (including copolymerized polyamides); poly(vinyl chloride); poly(vinylidene chloride); acrylic resins; polystyrene-based resins; vinyl ester-based resins; polyester elastomers; polyurethane elastomers; polystyrene elastomers; halogenated polyolefins, such as chlorinated polyethylene and chlorinated polypropylene; and aromatic or aliphatic polyketones. One type of these may be used alone, or two or more types of these may be used in combination.

Among these, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present EVOH composition layers are denoted by a (a1, a2, ...) and the substrate resin layers are denoted by b (b1, b2, ...), the layer configuration of the present multilayer structure may be any combination such as a/b, b/a/b, a/b/a, a1/a2/b, a/b1/b2, b2/b1/a/b1/b2, or b2/b1/a/b1/a/b1/b2. When a recycled layer containing a mixture of the present EVOH composition and a thermoplastic resin other than the present EVOH composition, which is produced by

remelt-molding an end, a defective product, or the like generated in the process of producing the present multilayer structure, is denoted by R, the layer configuration can also be b/R/a, b/R/a/b, b/R/a/R/b, b/a/R/a/b, b/R/a/R/a/R/b, or the like. The number of layers of the present multilayer structure in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxy group-containing modified polyolefin-based polymers produced by chemically bonding an unsaturated carboxylic acid or anhydride thereof to a polyolefin-based resin by an addition reaction, a graft reaction, or the like. Examples of the carboxy group-containing modified polyolefin-based polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One type of these may be used alone, or two or more types of these may be used in combination.

In the present multilayer structure, when an adhesive resin layer is used between the present EVOH composition layer and the substrate resin layer, the adhesive resin layer is located on both sides of the present EVOH composition layer, and therefore use of an adhesive resin having excellent hydrophobicity is preferable.

The substrate resin or the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the spirit of the present disclosure is not impeded (for example, 30 mass% or less, and preferably 10 mass% or less, with respect to the entire resin). One type of these can be used alone, or two or more types of these can be used in combination.

The present EVOH composition layer and the substrate resin layer can be laminated (including the case of interposing an adhesive resin layer) by a known method. Examples thereof include a method of melt-extrusion laminating the substrate resin to a film, a sheet, or the like of the present EVOH composition, a method of melt-extrusion laminating the present EVOH composition to the substrate resin layer, a method of co-extruding the present EVOH composition and the substrate resin, a method of dry laminating the present EVOH composition (layer) and the substrate resin (layer) using a known adhesive such as an organic titanium compound, an isocyanate compound, a polyester-based compound, or a polyurethane compound, and a method of applying a solution of the present EVOH composition onto the substrate resin and then removing the solvent. Among these, production is preferably performed by melt-molding the present EVOH composition layer, and specifically by the co-extrusion method, from the viewpoints of cost and the environment.

The present multilayer structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is too low, stretchability deteriorates, whereas when the stretching temperature is too high, a stable stretched state is difficult to maintain.

The present multilayer structure after the stretching treatment may be subjected to heat setting for the purpose of imparting dimensional stability. The heat setting can be performed by a well-known means; for example, the present multilayer structure after the stretching treatment is heat-treated usually at a temperature of 80 to 180°C and preferably at a temperature of 100 to 165°C usually for about 2 to 600 seconds while the present multilayer structure after the stretching treatment is kept in a state of tension.

In the case of using the present multilayer structure after the stretching treatment as a shrink film, in order to impart heat shrinkability, the present multilayer structure after the stretching treatment is not subjected to the heat setting described above, but subjected to a treatment such as application of cool air to the present multilayer structure after the stretching treatment to cool-set the structure.

The thickness of the present multilayer structure (including the multilayer structure after stretching), and the thicknesses of the present EVOH composition layer, the substrate resin layer, and the adhesive resin layer constituting the multilayer structure cannot be generalized due to the layer configuration, the type of the substrate resin, the type of the adhesive resin, the application, the packaging form, the required physical properties, and the like, but the thickness of the present multilayer structure (including the multilayer structure after stretching) is usually from 10 to 5000 μm, preferably from 30 to 3000 μm, and particularly preferably from 50 to 2000 μm. The thickness of the present EVOH composition layer is usually from 1 to 500 μm, preferably from 3 to 300 μm, and particularly preferably from 5 to 200 μm. The thickness of the substrate resin layer is usually from 5 to 3000 μm, preferably from 10 to 2000 μm, and particularly preferably from 20 to 1000 μm. The thickness of the adhesive resin layer is usually from 0.5 to 250 μm, preferably from 1 to 150 μm, and

particularly preferably from 3 to 100 μm.

Furthermore, the thickness ratio of the present EVOH composition layer to the substrate resin layer (present EVOH composition layer/substrate resin layer) in the present multilayer structure is usually from 1/99 to 50/50, preferably from 5/95 to 45/55, and particularly preferably from 10/90 to 40/60, in terms of the ratio of the thickest layers to each other when there is a plurality of layers for each type of layer. The thickness ratio of the present EVOH composition layer to the adhesive resin layer (present EVOH composition layer/adhesive resin layer) in the present multilayer structure is usually from 10/90 to 99/1, preferably from 20/80 to 95/5, and particularly preferably from 50/50 to 90/10, in terms of the ratio of the thickest layers to each other when there is a plurality of layers for each type of layer.

A molded body, such as a cup or a tray, can also be produced by molding the present multilayer structure. In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt-coating, bag-making, deep drawing, box processing, tube processing, and splitting.

A monolayer film molded using the present EVOH composition or a container or lid material (packaging material container) made by molding the present multilayer structure, such as a bag, a cup, a tray, a tube, or a bottle, is useful for various packaging material containers for general food products, seasonings such as mayonnaise and dressing, fermented foods such as miso, oil and/or fat foods such as salad oil, beverages, cosmetics, pharmaceuticals, and the like.

## Examples

Hereinafter, the present disclosure will be more specifically described with reference to examples, but the present disclosure is not limited to the examples below as long as it does not deviate from the gist of the present disclosure. Unless otherwise specified, "parts" and "%" below are based on mass.

Prior to the examples, the following components were prepared.

Component (A): EVOH

- EVOH (ethylene content: 32 mol%; MFR (210°C; load: 2160 g): 3.8 g/10 min; density: 1.19 g/cm$^3$)

Component (B): Copolymer including ethylene structural unit and structural unit represented by Formula (1) above

Component B1: Ethylene-vinyl carboxylate copolymer and/or ethylene-acrylate copolymer

- B1-1: EVA (Ultrathene 3B53A, available from Tosoh Corporation; MFR (190°C; load: 2160 g): 5.7 g/10 min; density: 0.952 g/cm$^3$)
- B1-2: EVA (EVAFLEX EV170, available from Dow-Mitsui Polychemicals Co., Ltd.; MFR (190°C; load: 2160 g): 1 g/10 min; density: 0.960 g/cm$^3$)
- B1-3: EVA (EVAFLEX V5961, available from Dow-Mitsui Polychemicals Co., Ltd.; MFR (190°C; load: 2160 g): 1.7 g/10 min; density: 0.930 g/cm$^3$)
- B1-4: EEA (REXPEARL EEA A4200, available from Japan Polyethylene Corporation; MFR (190°C; load: 2160 g): 5 g/10 min; density: 0.934 g/cm$^3$)

Component B2: At least one copolymer selected from the group consisting of ethylene-vinyl carboxylate copolymer having a polar group, ethylene-acrylate copolymer having a polar group, ethylene-vinyl carboxylate-maleic anhydride copolymer, and ethylene-acrylate-maleic anhydride copolymer

- B2-1: Maleic anhydride-modified EVA (MFR (190°C; load: 2160 g): 16 g/10 min; density: 0.95 g/cm$^3$)
- B2-2: Maleic anhydride-modified EVA (MFR (190°C; load: 2160 g): 2 g/10 min; density: 0.92 g/cm$^3$)
- B2-3: Ethylene-methyl acrylate-maleic anhydride copolymer (EMA) (REXPEARL ET ET230X, available from Japan Polyethylene Corporation; MFR (190°C; load: 2160 g): 8.0 g/10 min; density: 0.943 g/cm$^3$)

Component C: Titanium compound

- Titanium oxide (available from FUJIFILM Wako Pure Chemical Corporation; purity: 99.0+%)

Example 1

80 parts of (A), 15 parts of (B1-1), 5 parts of (B2-1), and (C) in a content in terms of metal of 0.1 ppm by mass with respect to the total mass of the entire composition [sum of (A) + (B1-1) + (B2-1)] were dry-blended, and thus a mixture was obtained.

The mixture was then supplied to a twin-screw extruder (20 mmφ) equipped with a two-hole die, extruded under the following extrusion conditions, and the discharged strand was cooled and solidified in a water tank.

Then, air was blown to the solidified strand to remove water droplets on the strand surface, then the strand was cut, and thus pellets of the EVOH composition were produced.

Extrusion Condition

- Set temperature of extruder (°C): C1/C2/C3/C4/C5/C6
  = 150/200/210/210/210/210 (herein, C1 to C6 represent heating parts of an extruder. Specifically, C represents a barrel part of an extruder, and C1 to C6 are in the order from the part closest to the hopper)

Examples 2 to 7 and Comparative Examples 1 to 3

Pellets of each EVOH composition were obtained in the same manner as in Example 1 except for changing the raw materials contained in the mixture to those listed in Table 1 below.

The obtained EVOH composition pellets were evaluated for "thermal stability" and "coloring suppression property" based on the following indicators.

Thermal Stability

To evaluate stability during heating, the masses before and after heating were measured as described below, and a residual percentage (%) was calculated.

That is, for 5 mg of the obtained pellets, the masses before and after heating were measured using a thermogravimetric analyzer (Pyris 1 TGA, available from PerkinElmer) under the conditions including, in a nitrogen atmosphere, a gas flow rate of 20 mL/min, a temperature of 230°C, and a time of 63 minutes, and the masses before and after heating were substituted into the following equation.

The obtained values are shown together in Table 1 below.

$$\text{Mass residual percentage (\%)} = \text{mass after heating/mass before heating} \times 100$$

A higher mass residual percentage indicates superior thermal stability. Note that, in the present evaluation, the difference for the case of heating for 63 minutes was measured; however, in actual production, thermal history for a longer period of time occurs. Thus, even when the numerical difference is apparently small in the present evaluation, in practice, it is a huge difference in effect.

Coloring Suppression Property

To evaluate the change in color before and after heating, YI values before and after heating were measured as described below, and then the difference thereof (YI value after heating - YI value before heating) was calculated.

That is, measurement was performed by using a ground product obtained by crushing the obtained pellets into 1 to 5 mm squares and being charged in a cylinder having an inner diameter of 32 mm and a height of 30 mm in a manner that excess was leveled off, and using a Spectrophotometer SE 6000 (available from Nippon Denshoku Industries Co., Ltd.) (YI value before heating).

Then, a YI value was measured in the same manner for the ground product after heating obtained by subjecting

the ground product to a heat treatment in an oven at 150°C in an air atmosphere for 5 hours (YI value after heating).

The obtained values are shown together in Table 1 below.

A smaller difference in the YI values before and after heating indicates more suppression in heat-induced coloring.

[Table 1]

| | Composition | | | | | | | | | Thermal stability | Coloring suppression property | | |
|---|---|---|---|---|---|---|---|---|---|---|---|---|---|
| | Component (A) | Component (B) | | | | | Component (C) | *(A/B)* | (B2/B1) | Mass residual percentage (%) | YI value before heating | YI value after heating | Difference |
| | | Component (B1) | | Component (B2) | | Total | | | | | | | |
| Example 1 | 80 | B1-1 | 15 | B2-1 | 5 | 20 | 0.1 ppm | 4 | 0.33 | 99.2 | 4.4 | 26.6 | 22.2 |
| Example 2 | 80 | B1-1 | 15 | B2-1 | 5 | 20 | 1 ppm | 4 | 0.33 | 99.2 | 4.4 | 25.5 | 21.1 |
| Example 3 | 80 | B1-1 | 15 | B2-1 | 5 | 20 | 3 ppm | 4 | 0.33 | 99.3 | 4.6 | 22.2 | 17.6 |
| Example 4 | 80 | B1-1 | 15 | B2-2 | 5 | 20 | 1 ppm | 4 | 0.33 | 98.9 | 3.9 | 20 | 16.1 |
| Example 5 | 80 | B1-2 | 15 | B2-1 | 5 | 20 | 1 ppm | 4 | 0.33 | 98.8 | 5.3 | 21.5 | 16.2 |
| Example 6 | 80 | B1-3 | 15 | B2-1 | 5 | 20 | 1 ppm | 4 | 0.33 | 98.8 | 4.2 | 16.2 | 12.0 |
| Example 7 | 80 | B1-4 | 15 | B2-3 | 5 | 20 | 1 ppm | 4 | 0.33 | 99.0 | 4.5 | 27.9 | 23.4 |
| Comparative Example 1 | 80 | B1-1 | 15 | B2-1 | 5 | 20 | 0 | 4 | 0.33 | 99.3 | 5.4 | 40.8 | 35.4 |
| Comparative Example 2 | 80 | B1-1 | 15 | B2-1 | 5 | 20 | 10 ppm | 4 | 0.33 | 98.7 | 4.7 | 27.2 | 22.5 |
| Comparative Example 3 | 80 | B1-4 | 15 | B2-3 | 5 | 20 | 0 | 4 | 0.33 | 99.1 | 4.4 | 34.9 | 30.5 |

(parts)

It was found that Examples 1 to 3 each containing the specific amount of the titanium compound (C) had the smaller YI value after heating although the mass residual percentage was equivalent compared to that of Comparative Example 1, and heat-induced coloring was suppressed. Furthermore, it was found that Example 7 had the suppressed heat-induced coloring although the mass residual percentage was equivalent to that of Comparative Example 3.

Furthermore, it was found that Comparative Example 2 containing the titanium compound (C) in an amount greater than the amount specified in the present disclosure had the mass residual percentage lower than those of Examples 1 to 3, and had inferior thermal stability.

As described above, the present EVOH composition can reduce heat-induced color change while thermal stability is maintained.

Specific embodiments of the present disclosure were described in the above examples, but the above examples are merely illustrative and are not to be construed as limiting. Various modifications apparent to a person skilled in the art are intended to be within the scope of the present disclosure.

Industrial Applicability

The present composition has excellent thermal stability and a heat-induced coloring suppression property. Therefore, a molded body made of the present composition and a multilayer structure including a layer containing the present composition are useful as materials for various packaging containers.

## Claims

1. A composition comprising: an ethylene-vinyl alcohol copolymer (A); a copolymer (B) including an ethylene structural unit and a structural unit represented by Formula (1) below; and a titanium compound (C);

    a content of the titanium compound (C) in the composition, in terms of metal, being 0.001 ppm by mass or greater and less than 10 ppm by mass,

    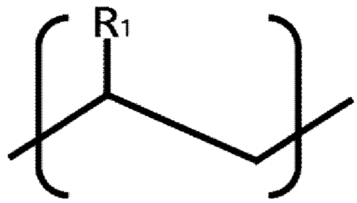

    ••• Formula (1)

    where $R_1$ is an alkoxycarbonyl group (-$COOR_A$) or an acyloxy group (-$OOCR_A$), and the $R_A$ represents a hydrogen atom or an aliphatic hydrocarbon group having from 1 to 20 carbons.

2. The composition according to claim 1, wherein $R_A$ represented in Formula (1) above is a hydrogen atom or an aliphatic hydrocarbon group having from 1 to 4 carbons.

3. The composition according to claim 1, wherein the copolymer (B) includes an ethylene-vinyl carboxylate copolymer and/or an ethylene-acrylate copolymer (B1).

4. The composition according to claim 1, wherein

    the copolymer (B) includes
    an ethylene-vinyl carboxylate copolymer and/or an ethylene-acrylate copolymer (B1), and
    at least one copolymer (B2) selected from the group consisting of an ethylene-vinyl carboxylate copolymer having a polar group, an ethylene-acrylate copolymer having a polar group, an ethylene-vinyl carboxylate-maleic anhydride copolymer, and an ethylene-acrylate-maleic anhydride copolymer.

5. The composition according to claim 4, wherein the polar group in the ethylene-vinyl carboxylate copolymer having a polar group is a carboxy group or a carbonyloxycarbonyl group.

6. The composition according to claim 4, wherein
    the copolymer (B) is the ethylene-vinyl carboxylate copolymer having a polar group and/or the ethylene-acrylate

copolymer having a polar group, and at least one of the polar groups is a carboxy group.

**7.** The composition according to claim 5, wherein a monomer having the carbonyloxycarbonyl group is maleic anhydride.

**8.** The composition according to claim 1, wherein the content of the titanium compound (C) in the composition is 0.001 ppm by mass or greater and 5 ppm by mass or less.

**9.** The composition according to claim 1, wherein a mass ratio (A/B) of the ethylene-vinyl alcohol copolymer (A) to the copolymer (B) is from 70/30 to 99/1.

**10.** The composition according to claim 1, wherein a mass ratio (A/B) of the ethylene-vinyl alcohol copolymer (A) to the copolymer (B) is from 70/30 to 85/15.

**11.** The composition according to claim 4, wherein a mass ratio (B2/B1) of the copolymer (B2) to the copolymer (B1) is from 0.01 to 10.

**12.** The composition according to claim 4, wherein a mass ratio [A/(B1 + B2)] of the ethylene-vinyl alcohol copolymer (A) to a total mass of the copolymer (B1) and the copolymer (B2) is from 50/50 to 99/1.

**13.** A composition for recycling, the composition according to any one of claims 1 to 12 being for recycling.

**14.** A regrind layer comprising the composition according to any one of claims 1 to 12.

**15.** A multilayer structure comprising a layer including the composition according to any one of claims 1 to 12.

**16.** The multilayer structure according to claim 15, further comprising an adhesive resin layer.

**17.** A molded body obtained by molding the multilayer structure according to claim 15.

**18.** A packaging material container obtained by molding the multilayer structure according to claim 15.

**19.** A method for producing the composition according to claim 1,

the method comprising
mixing the ethylene-vinyl alcohol copolymer (A), the copolymer (B), and the titanium compound (C).

**20.** A method for producing the composition according to claim 4,

the method comprising
mixing the ethylene-vinyl alcohol copolymer (A), the copolymer (B1), the copolymer (B2), and the titanium compound (C).

**21.** A method for producing a multilayer structure, the method comprising:

producing a composition by the method for producing a composition according to claim 19 or claim 20; and
forming, as at least one layer of a multilayer structure, a layer including the composition produced by the producing of the composition.

**INTERNATIONAL SEARCH REPORT**

International application No.
**PCT/JP2024/031550**

**A. CLASSIFICATION OF SUBJECT MATTER**

***C08L 23/26***(2025.01)i; ***B32B 27/28***(2006.01)i; ***C08K 3/22***(2006.01)i; ***C08L 23/08***(2025.01)i
FI: C08L23/26; B32B27/28 101; B32B27/28 102; C08K3/22; C08L23/08

According to International Patent Classification (IPC) or to both national classification and IPC

**B. FIELDS SEARCHED**

Minimum documentation searched (classification system followed by classification symbols)

C08L23/26; B32B27/28; C08K3/22; C08L23/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2004-107557 A (THE NIPPON SYNTHETIC CHEMICAL INDUSTRY CO., LTD.) 08 April 2004 (2004-04-08)<br>claims, examples | 1-21 |
| A | WO 2012/060371 A1 (KURARAY CO., LTD.) 10 May 2012 (2012-05-10)<br>claims, examples | 1-21 |
| A | JP 2018-41000 A (KONICA MINOLTA, INC.) 15 March 2018 (2018-03-15)<br>claims, examples | 1-21 |
| P, A | WO 2024/166930 A1 (MITSUBISHI CHEMICAL CORPORATION) 15 August 2024 (2024-08-15)<br>claims, examples, paragraphs [0006], [0008], [0032]-[0033], [0036], [0073]-[0074], [0079], [0089] | 1-21 |
| P, A | WO 2023/190814 A1 (MITSUBISHI CHEMICAL CORPORATION) 05 October 2023 (2023-10-05)<br>claims, examples, paragraphs [0007]-[0008], [0344] | 1-21 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/031550**

**C. DOCUMENTS CONSIDERED TO BE RELEVANT**

| Category* | Citation of document, with indication, where appropriate, of the relevant passages | Relevant to claim No. |
|---|---|---|
| P, A | WO 2023/190815 A1 (MITSUBISHI CHEMICAL CORPORATION) 05 October 2023 (2023-10-05)<br>claims, examples | 1-21 |
| P, A | WO 2023/190813 A1 (MITSUBISHI CHEMICAL CORPORATION) 05 October 2023 (2023-10-05)<br>claims, examples | 1-21 |

Form PCT/ISA/210 (second sheet) (July 2022)

**INTERNATIONAL SEARCH REPORT**
**Information on patent family members**

International application No.
**PCT/JP2024/031550**

| Patent document cited in search report | Publication date (day/month/year) | Patent family member(s) | Publication date (day/month/year) |
|---|---|---|---|
| JP 2004-107557 A | 08 April 2004 | (Family: none) | |
| WO 2012/060371 A1 | 10 May 2012 | US 2013/0225756 A1<br>claims, examples<br>EP 2636701 A1<br>CN 103282424 A | |
| JP 2018-41000 A | 15 March 2018 | (Family: none) | |
| WO 2024/166930 A1 | 15 August 2024 | (Family: none) | |
| WO 2023/190814 A1 | 05 October 2023 | JP 2023-152996 A<br>JP 2023-152997 A<br>JP 2023-152998 A<br>JP 2023-152999 A<br>JP 2023-153000 A<br>TW 202402936 A | |
| WO 2023/190815 A1 | 05 October 2023 | JP 2023-152989 A | |
| WO 2023/190813 A1 | 05 October 2023 | JP 2023-152984 A<br>JP 2023-152985 A<br>JP 2023-152986 A<br>JP 2023-152987 A<br>JP 2023-152988 A<br>JP 2023-152990 A<br>JP 2023-152992 A<br>JP 2023-152994 A<br>JP 2023-152995 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 423185 B
- JP 5002699 B
- JP 4642195 B
- JP 2001288323 A
- JP 5610955 B